# EUROPEAN PATENT APPLICATION

(11) **EP 2 541 226 A2**
(43) Date of publication of application: **02.01.2013**
(21) Application number: 12173554.2
(22) Date of filing: 26.06.2012
(51) Int. Cl.: G01N 1/22, F22B 1/18

(54) **Method and arrangement for measuring concentrations of flue gas**

(30) Priority: 29.06.2011 FI 20115679
(71) Applicant: Metso Power Oy, 33900 Tampere (FI)
(72) Inventor: Roppo, Juha, 33900 Tampere (FI); Palonen, Marko, 33900 Tampere (FI); Maunula, Joni, 33900 Tampere (FI)
(74) Representative: Ylitalo, Matti Juhani

(57) **Abstract**

A method and an arrangement for measuring concentrations of flue gas generated in a thermal process are disclosed. The method comprises the following steps: taking a flue gas sample from the flue gas flowing in a burning apparatus (1) and measuring with a measuring device (9) alkali halides of the flue gas sample. Flue gas is directed to the measuring device (9) through a sampling filter (17). The temperature of the sampling filter (17) is maintained at a temperature range that allows the alkali halides in the flue gas to penetrate the sampling filter (17) in a gaseous form.

## Description

### Background

The invention relates to a method for measuring concentrations of flue gas generated in a thermal process, the method comprising taking a flue gas sample of the flue gas flowing in a burning apparatus and measuring with a measuring device the alkali halides of the flue gas sample.

The invention further relates to an arrangement for measuring concentrations of flue gas generated in a thermal process.

Flue gas generated in thermal processes may contain compounds that cause contamination and corrosion in a burning apparatus. These compounds include alkali halides that are mainly formed when sodium and potassium link with halides, such as chloride, bromide, fluoride or iodide. The formation and amounts of said harmful compounds may be reduced, among other things, by adding suitable reagents to the process. The essential thing is that the concentration of harmful compounds can be measured from flue gases.

Publication US 7229833 discloses a solution for measuring flue gas concentration. The measurement is based on a measuring arrangement operating on an ultraviolet wave length, where an UV beam emitted through flue gas is directed into a spectrometer.

A problem with the above arrangement is that the penetrating power of an UV beam may be so low that it cannot be received in a spectrometer. The precision of the measurement is then not sufficient.

### Brief description

An object of the invention is to provide a new method and measuring arrangement so as to solve the aforementioned problem.

The object of the invention is achieved with a method and measuring arrangement that are characterized by what is stated in the independent claims. Preferred embodiments of the method and measuring arrangement are disclosed in the dependent claims.

The method is based on directing flue gas to a measuring device through a sampling filter and maintaining the temperature of the sampling filter at a temperature range that allows the alkali halides in the flue gas to penetrate the sampling filter in a gaseous form.

The measuring arrangement is based on the fact that the arrangement comprises a sampling filter connected to the flow channel of flue gas, through which the flue gas sample is directed; a measuring device for measuring alkali halides in the flue gas sample that has flown through the sampling filter; and a temperature control arrangement for maintaining the temperature in the sampling filter so that the alkali halides in the flue gas sample penetrate the sampling filter in a gaseous form.

The method and system of the invention provide the advantage that measurement reliability is better than before.

### Brief description of the figures

The method and arrangement are described in greater detail in the attached drawings, in which
Figure 1 shows schematically a measuring arrangement according to an embodiment of the invention arranged in a burning apparatus,
Figure 2 shows schematically a measuring arrangement according to an embodiment of the invention arranged in a second burning apparatus,
Figure 3 shows schematically a measuring arrangement according to an embodiment of the invention arranged in a third burning apparatus,
Figure 4 shows schematically a measuring arrangement and method according to an embodiment of the invention,
Figure 5 shows schematically a measuring arrangement and method according to a second embodiment of the invention,
Figure 6 shows schematically a measuring arrangement and method according to a third embodiment of the invention, and
Figure 7 shows schematically a measuring arrangement and method according to a fourth embodiment of the invention.

In the figures, the embodiments are shown simplified for the sake of clarity. Like reference numerals refer to like parts in the figures.

### Detailed description of the invention

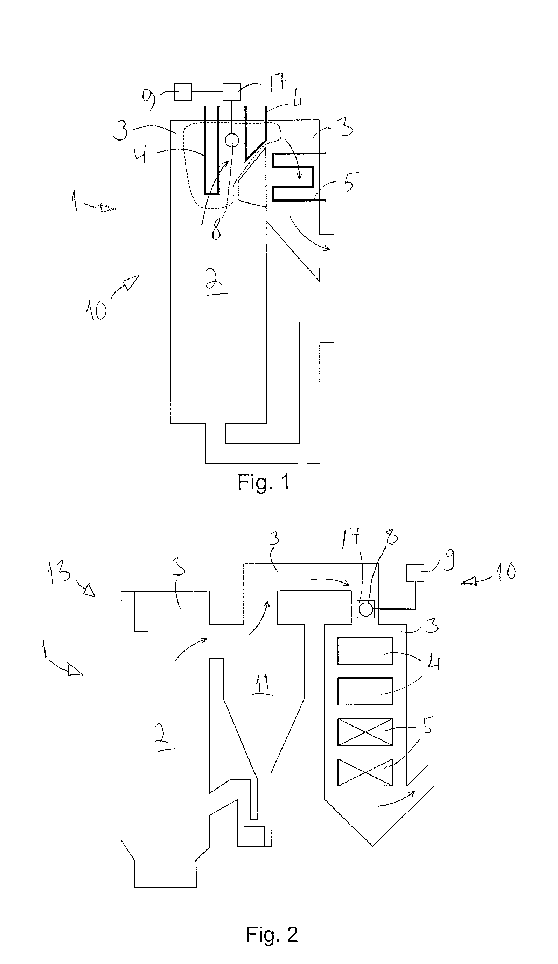

Figure 1 shows schematically a measuring arrangement according to an embodiment of the invention arranged in a burning apparatus.

The burning apparatus 1 comprises herein a bubbling fluidized-bed boiler (BFB) 12 known per se. This, as well as other boiler types based on fluidization, are especially well suited for burning so-called poor-grade fuels, such as waste, recycled fuels, certain biomasses, and waste coals; naturally other fuels can also be used.

The burning apparatus 1 may comprise a furnace 2, flue gas channel 3 and channels for feeding combustion air, fuel, reagent and other additives possibly needed in burning into the furnace 2. The route of flue gas is shown by arrows.

**Thermal** energy generated in a thermal process taking place in a burning apparatus 1 can be recovered by means of walls formed of water pipes and other heat delivery surfaces. In Figure 1, these are represented by superheaters 4 that reside at the forward end of the flue gas channel 3, and a steam generator 5 located in the so-called second pass. In addition, the burning apparatus may have other heat delivery surfaces.

Typically the flue gas channel 3 comprises several parts, and the flow direction of the flue gas may vary between them. The flue gas flows and their movement are known per se to a person skilled in the art and, therefore, they are not described in more detail herein.

Flue gases generated in the burning apparatus 1 flow through the flue gas channels 3 to exit from the apparatus. In this specification, the term "flue gas channel" refers to all parts of the burning plant 1 that have heat exchangers, such as superheaters or steam generators, receiving thermal energy from flue gas. In the embodiment shown in Figure 1, the flue gas channels thus also include the top part of the furnace 2.

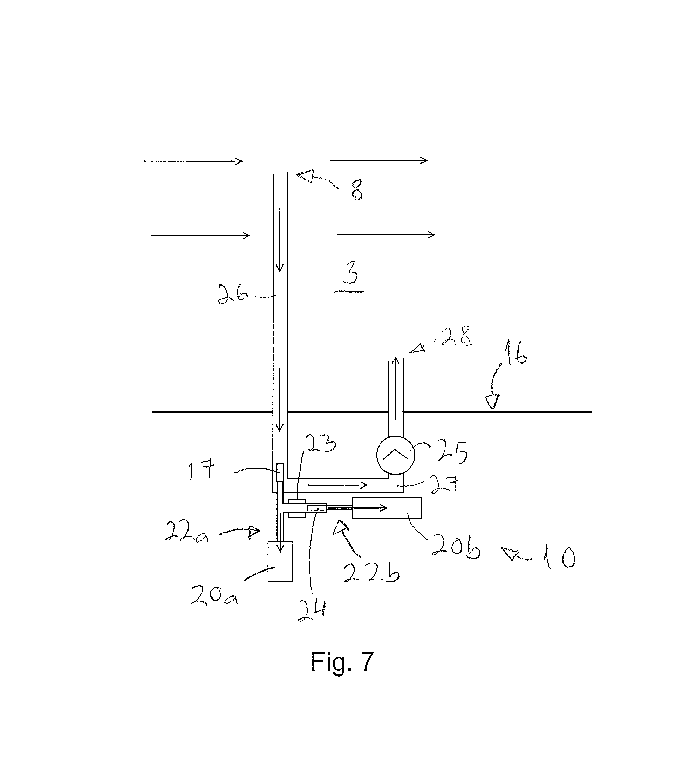

A flue gas sample is taken from the flue gas channel 3 at a sampling point 8. The sampling point 8 comprises an aperture or flow route opening into the flue gas channel 3. Sampling may be done with a sampler having a length of 1.5 m, for instance. A sampler 26 is shown in Figure 7.

The sample is led to a sampling filter 17, the structure of which is described in more detail later in this specification.

The sampling point 8 is, in this case, in the superheater area, that is, in the part of the flue gas channel that has superheaters 4. The location of the sampling point 8 may also be elsewhere in the superheater area. One such area, where the sampling point 8 may be arranged, is shown by a dashed line in the figure. The flue gas sample may be taken from the superheater area or from a section of the flue gas channel 3 preceding it. In one embodiment, several, at least two, sampling points 8 are arranged in the flue gas channel 3.

The sampling point 8 is preferably located at a location of the flue gas channel 3 where the flue gas temperature is at least 650°C. The temperature of the sampling filter 17 is also at least 650°C. When the temperature is in said range, the alkali halides, for instance alkali chlorides, in the flue gas are in a gaseous form and may thus penetrate the sampling filter 17, and sulphates, such as K₂SO₄ and Na₂SO₄, are in a particle form that cannot penetrate the sampling filter 8. It should be noted that the term "gaseous" refers herein to both gaseous and vapour form.

In a second embodiment, the temperature of the flue gases is preferably at least 700°C. In a third embodiment, the temperature of the flue gases is in the range of 650°C to 850°C, for instance 700°C to 850°C.

In this specification, alkali halides refer especially to alkali chlorides, alkali bromides, alkali iodides, and alkali fluorides.

In this specification alkali chlorides refer to salts formed by alkali metals and chlorine, such as potassium chloride (KCI) and sodium chloride (NaCl).

The sampling filter 17 is connected to the sampling point 8 and measuring device 9 that is arranged to measure flue gas concentrations. The measuring device 9 is described in more detail later on in this specification.

The sampling filter 17 and measuring device 9 form an essential part of the measuring arrangement 10.

Figure 2 shows schematically a measuring arrangement according to an embodiment of the invention arranged in a second burning apparatus. Said burning apparatus 1 comprises a circulating fluidized-bed boiler (CBF) 13. This uses such a high gas speed that fuel and bed material are transported with the flue gas from the furnace 2 to the flue gas channel 3. Therefore, a cyclone 11 is arranged in the flue gas channel 3, through which the bed material and unburned fuel is returned to the bottom of the furnace 2.

A sampling point 8 with a sampling filter 17 is arranged in the flue gas channel 3. The sampling filter 17 is thus in direct connection with the flue gas channel 3 - unlike in the embodiment shown in Figure 1.

It should be noted in this context that the arrangement in which the sampling filter 17 is arranged at a distance from the sampling point 8 can also be used in other burning apparatuses than those shown in the figures of this specification. Correspondingly, the arrangement in which the sampling filter 17 is arranged at the sampling point 8 can also be used in other burning apparatuses than those shown in the figures of this specification.

The sampling filter 17 is connected to a measuring device 9. The sampling point 8 is at a location of the flue gas channel 3 where the flue gas temperature and sampling filter 17 temperature are preferably in the range of 650°C to 850°C, for example 700°C to 850°C.

Now the sampling point 8 is arranged in the flue gas channel 3 section that is immediately in front of the superheaters 4, or the superheater area, in the flue gas flow direction. The sampling point 8 may also be arranged elsewhere, such as in the superheater area.

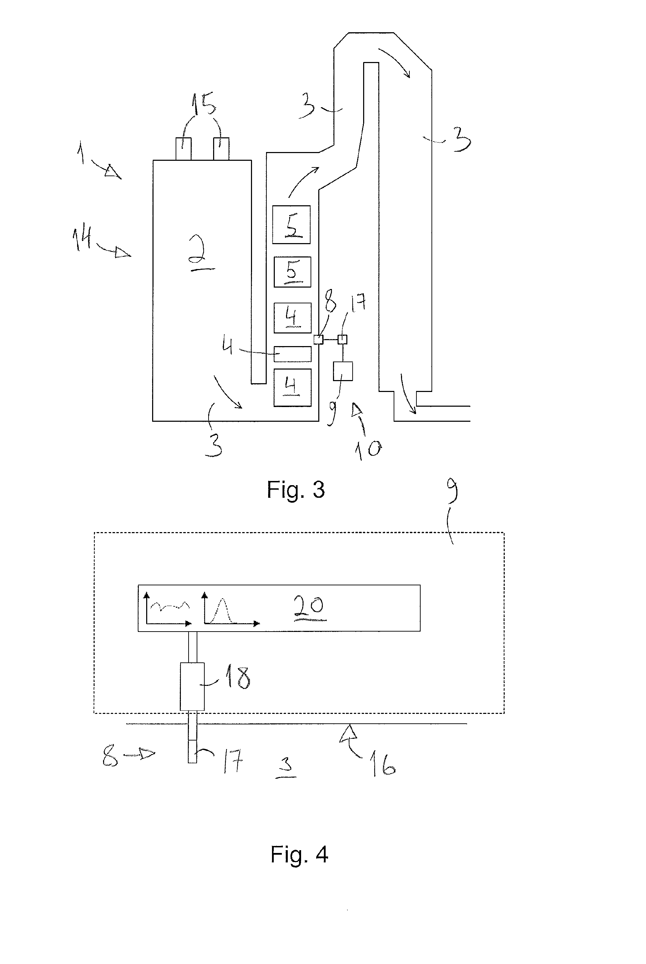

Figure 3 shows schematically a measuring arrangement according to an embodiment of the invention arranged in a third burning apparatus.

Here, the burning apparatus 1 comprises a gas boiler 14 that has at least one burner 15, a furnace 2, and a flue gas channel 3. Superheaters 4 and other heat exchangers, such as an economizer 5, are arranged into the flue gas channel 3. A sampling point 8 is also arranged in the flue gas channel 3 for taking a flue gas sample for delivery through the sampling filter 17 to the measuring device 9. The location of the sampling point 8 is already selected according to the above principle.

It should be noted in this context that the operation of the burning apparatus 1 may be based not only on the above-mentioned boiler types, but also on a soda recovery boiler, etc.

Figure 4 shows schematically a measuring arrangement and method according to an embodiment of the invention.

The sampling filter 17 may be arranged either directly to a flue gas channel 3 or to a side channel branching off from the flue gas channel 3 or to a sampler 26, for instance.

The sampling filter 17 may be made of a ceramic material, such as aluminium oxide, metal or a combination of these. The sampling filter 17 may be made by sintering, for example. The sampling filter 17 may be cylindrical, candle-like, planar or the like in shape. The length of a cylindrical sampling filter 17 may be approximately 100 mm and its diameter 20 mm, for instance. However, it should be noted that said measurements are only one alternative for the sampling filter 17.

The sampling filter 17 is arranged to remove particles with a diameter of at least 1 µm, preferably at least 0.1 µm, from the flue gas directed to it. This way, the coarse components of flue gas cannot pass through the sampling filter 17, but are filtered away. The flue gas that has passed the sampling filter 17 forms a flue gas sample that is directed to the measuring device 9.

As stated earlier in this specification, the sampling point 8 is arranged at a location of the flue gas channel in such a manner that the flue gas temperature is preferably in the range of 650°C to 850°C, for example 700°C to 850°C.

The temperature of the sampling filter 17 is also within said range, whereby alkali chlorides, for instance, pass through it in a gaseous form. The positioning of the sampling filter 17 in this way forms an embodiment of the temperature control arrangement 19 in the measuring arrangement, with which the temperature of the sampling filter 17 is kept in the above-mentioned range, whereby measurable components in the flue gas penetrate the filter in a gaseous form.

The temperature control arrangement 19 may comprise heating means and/or cooling means, with which the temperature of the sampling filter 17 is kept in the desired range. However, it should be emphasized that the heating or cooling means are in no way necessary parts of the measuring arrangement.

The flue gas sample is led from the sampling filter 8 to a pre-processing unit 18 belonging to the measuring device 9, which typically cools and/or dilutes the flue gas sample. This may be done by a porous pipe, ejector dilutor, dilution chamber or the like.

The flue gas sample may be forced through the sampling filter 17 with an ejector or pump, for example, that are not shown in the figures.

In the pre-processing unit, the compounds, alkali chlorides, for example, measured from the flue gas sample form particles typically through homogenous nucleation and condensation, in other words, the particles are formed directly from the gas.

The cooled and/or diluted flue gas sample with its particles is directed from the pre-processing unit 18 to an analyser 20. The analyser 20 measures the particle concentration and/or particle size distribution of the flue gas sample. The alkali chloride concentration of flue gas is determined indirectly on the basis of the particle concentration and/or particle size distribution of flue gas. This determination may be based on the principles described in the description of Figures 1 to 5 in FI publication 20095684, for instance.

The operation of the analyser 20 may be based on a device known per se, such as an optical device, a spectrometer operating on UV wavelengths, or flight time spectrometer, condensation nuclei counter, differential mobility analyser, impactor, electric impactor, electric detector, ELPI impactor developed by Dekati Oy, PPS detector developed by Pegasor Oy, etc.

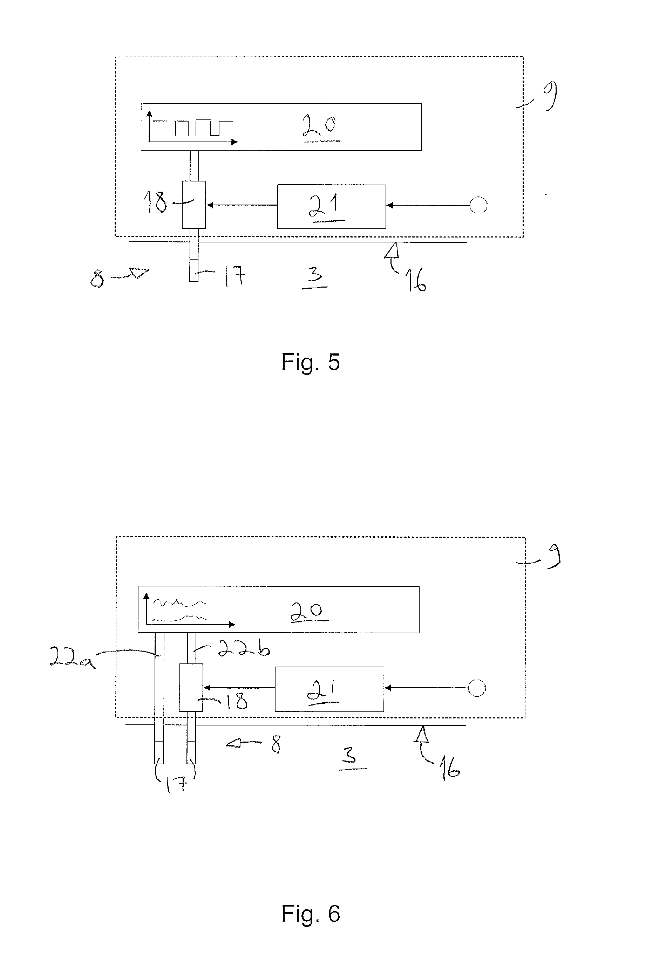

Figure 5 shows schematically a measuring arrangement and method according to a second embodiment of the invention arranged to measure alkali chlorides.

The sampling filter 17 is positioned in the burning plant according to the principles described earlier.

The flue gas sample is led through the sampling filter 17 to the pre-processing unit 18, where an alkali chloride-degrading reagent, such as sulphur dioxide SO₂, sulphur trioxide SO₃, sulphuric acid H₂SO₄, kaolin, or phosphate, is fed intermittently to it with a reagent feeding means 21.

The reagent feeding means 21 may comprise reagent preparation means, for instance means for preparing SO₃ catalytically from sulphur dioxide SO₂.

When degrading alkali chlorides, the reagent turns them into hydrogen chloride HCl. Flue gases usually inherently contain HCl that penetrates the sampling filter 17.

The analyser 20 is arranged to measure the HCl concentration. The operation of the analyser 20 may be based on a titrator or selective electrode that analyses Cl⁻ in water, or on an FTIR analyser that measures HCl or the like.

Because the reagent is fed into the flue gas sample intermittently, that is, only at specific intervals, two types of flue gas sample batches arrive intermittently at the analyser 20. The first sample batches contain HCl that the flue gas sample contains inherently, but not the HCl formed of alkali chlorides by the reagent. The second sample batches contain HCl that the flue gas sample contains inherently and the HCl formed of alkali chlorides by the reagent.

The alkali chloride concentration in the flue gas sample is obtained by subtracting the HCl concentration of the first sample batches from the HCl concentration of the second sample batches.

The flue gas sample is preferably not cooled before degradation of alkali chloride, and the temperature of the flue gas sample in the pre-processing unit is at least essentially in the same range as in the filtering section 17. If necessary, for example due to analyser requirements, the flue gas sample may be cooled after the pre-processing unit.

Measuring the reagent after adding it ensures that there is enough of it: if at this stage, the flue gas sample contains the reagent, enough has been added; if the flue gas sample does not contain the reagent at all, the amount of reagent added was most probably too small. By means of measuring the reagent, it is possible to adjust the amount of reagent to be added to the flue gas sample.

Figure 6 shows schematically a measuring arrangement and method according to a third embodiment of the invention. Its measuring principle is similar to that of the embodiment shown in Figure 5, in other words, the difference in HCl concentrations is measured before and after the alkali chlorides are degraded into HCl.

Two flue gas samples are now taken from the flue gas, each through its own sampling line 22a, 22b. Both sampling lines comprise a sampling point 8 and a sampling filter 17. The sampling lines 22a, 22b may naturally also have a common sampling point 8 and even a common sampling filter 17.

No reagent is added to the first flue gas sample taken through the first sampling line 22a, instead the flue gas sample is directed to the analyser 20 for the determination of its HCl concentration.

Reagent is added to the flue gas sample taken through the second sampling line 22b. The second sampling line 22b preferably includes reagent measurement as described above.

The analyser 20 measures the HCl or Cl⁻ concentration in both sampling lines 22a, 22b, and the alkali chloride concentration is calculated from the difference of said concentrations.

Figure 7 shows schematically a measuring arrangement and method according to a fourth embodiment of the invention.

The sampling point 8 is arranged by means of a sampler 26 deep into the flue gas flow at a distance from the wall 16 of the flue gas channel. The flue gas sample is sucked into the measuring arrangement 10 with an ejector 25. Extra flue gas is led back to the flue gas channel 3 via a circulation channel 27. The discharge opening 28 of the circulation channel is closer to the flue gas channel wall than the sampling point 8. This arrangement provides the advantage that it is easier to perform maintenance and control the temperature. The arrangement comprising the circulation channel 27 may naturally be implemented in the embodiments of Figures 4 to 6, for example.

The sampling filter 17 is arranged in the burning apparatus in such a manner that its temperature and that of the flue gas led through it is in the above-mentioned temperature range. Differing from Figure 7, the sampling filter 17 may also be arranged elsewhere in the sampler 26, at its end, that is, at the sampling point 8, for example.

The flue gas sample that has penetrated the sampling filter 17 is divided into two sampling lines 22a, 22b. The flue gas sample of the first sampling line 22a is led to a first analyser 20a that may be arranged to measure chlorine compounds, such as alkali chlorides KCl, NaCl and hydrogen chloride HCl. The measurement may be performed for instance by measuring the Cl⁻ concentration from the aqueous solution as described above.

The flue gas sample of the second sampling line 22b is preferably quickly cooled to a temperature below 500°C in a cooler 23. As a result of this, the alkali chlorides in the flue gas sample form particles and/or condensate in the cooler 23. However, there are no changes in the HCl concentration.

The cooled flue gas sample 22b of the second sample line 22b is led to a second filter 24 that filters away the particles formed in the cooler. HCl penetrates the second filter 24.

A second analyser 20b is arranged to measure the gas, especially HCl, that has penetrated the second filter 24. The measurement may be based on the above-mentioned HCl and Cl⁻ measurement methods.

The embodiment of Figure 7 may also be implemented as shown in Figure 5 by using two sampling filters 17.

The Cl⁻, K⁺, HCl and KCl concentration are determined either directly or by calculation from the measuring results.

It should be noted that the structure and materials of the second filter 24 may be the same as in the sampling filter 17.

It will be apparent to a person skilled in the art that as technology advances, the basic idea of the invention may be implemented in many different ways. The invention and its embodiments are thus not restricted to the examples described above but may vary within the scope of the claims.

### Reference numerals

- 1: burning apparatus
- 2: furnace
- 3: flue gas channel
- 4: superheater
- 5: steam generator
- 6: air feed channel
- 7: flue gas purification apparatus
- 8: sampling point
- 9: measuring device
- 10: measuring arrangement
- 11: cyclone
- 12: bubbling fluidised-bed boiler
- 13: circulating fluidised-bed boiler
- 14: gas boiler
- 15: burner
- 16: flue gas channel wall
- 17: sampling filter
- 18: pre-processing unit
- 19: temperature adjustment arrangement
- 20, 20a, 20b: analyser
- 21: reagent feed means
- 22a, 22b: sampling line
- 23: cooler
- 24: second filter
- 25: ejector
- 26: sampler
- 27: circulation channel
- 28: circulation channel discharge opening

## Claims

1. A method for measuring concentrations of flue gas generated in a thermal process, the method comprising
taking a flue gas sample of the flue gas flowing in a burning apparatus (1),
measuring with a measuring device (9) the alkali halides of the flue gas sample,
directing flue gas to a measuring device (9) through a sampling filter (17), and
maintaining the temperature of the sampling filter (17) at a temperature range that allows the alkali halides in the flue gas penetrate the sampling filter (17) in a gaseous form,
**characterised by** removing from the flue gas sample by means of the sampling filter (17) particles, the diameter of which is larger than 0.1 µm, preferably larger than 0.01 µm.

2. A method as claimed in claim 1, **characterised in that** the components to be measured are alkali chlorides.

3. A method as claimed in claim 1 or 2, **characterised by** maintaining the temperature of the sampling filter (17) at least at 650°C.

4. A method as claimed in claim 3, **characterised by** taking a flue gas sample in the superheater area and/or a section of the flue gas channel (3) preceding the superheater area.

5. A method as claimed in any one of the preceding claims, **characterised by** cooling the flue gas sample that has passed through the sampling filter (17) so as to form particles in it, and
measuring the particle concentration and/or particle size distribution of the flue gas sample.

6. A method as claimed in any one of claims 2 to 4, **characterised by** measuring the hydrogen chloride (HCl) concentration of the flue gas sample,
degrading the alkali chlorides in the flue gas sample and forming hydrogen chloride of them by adding to the flue gas sample a reagent that increases the HCl concentration of the flue gas sample,
measuring the hydrogen chloride concentration of the flue gas sample after the reagent has been added, and
determining the chlorine concentration in the alkali chlorides from the difference in the hydrogen chloride concentrations.

7. A method as claimed in claim 6, **characterised in that** the reagent comprises a sulphurous compound, preferably SO₂, SO₃ and/or H₂SO₄.

8. A method as claimed in claim 6, **characterised in that** the reagent comprises kaolin and/or phosphate.

9. A method as claimed in any one of claims 6 to 8, **characterised by** feeding the reagent temporally intermittently into the flue gas sample that has flown through the sampling filter (17), and
determining the hydrogen chloride concentration from both the flue gas sample containing the reagent and the sample without it.

10. A method as claimed in any one of claims 6 to 8, **characterised by** taking two flue gas samples, each through its own sampling filter (17), and
feeding the first flue gas sample to a measuring device (9) without added reagent, and
adding reagent to the second flue gas sample, after which it is fed to the measuring device (9), and
determining the alkali chloride concentration from the difference in the hydrogen chloride concentrations.

11. A method as claimed in any one of claims 1 to 4, **characterised by** dividing the flue gas sample that has flown through the sampling filter (17) into two sampling lines (22a, 22b),
measuring the flue gas sample of the first sampling line (22a) without essentially cooling it,
cooling the flue gas sample of the second sampling line (22b) so that the alkali halides form particles and/or condensate,
directing the cooled flue gas sample from the second sampling line (22b) to a second filter (24) that filters particles from the flue gas sample, and
measuring the concentration of the flue gas sample that has passed through the second filter (24).

12. A method as claimed in claim 11, **characterised by** measuring the hydrogen chloride or chloride concentration of the flue gas sample that has passed through the second filter (24).

13. An arrangement for measuring concentrations of flue gas generated in a thermal process, the arrangement comprising
a sampling filter (17) connected to a flue gas flow channel (3) and through which a flue gas sample is directed,
a measuring device (9) for measuring alkali halides in the flue gas sample that has flown through the sampling filter (17), and
a temperature adjustment arrangement (19) for maintaining the temperature of the sampling filter (17) so that the alkali halides in the flue gas sample penetrate the sampling filter (17) in a gaseous form, **characterised in that** the sampling filter (17) is arranged to remove particles with a diameter of at least 1 µm, preferably at least 0.1 µm, from the flue gas sample.

14. An arrangement as claimed in claim 13, **characterised in that** the measuring device (9) is arranged to measure alkali chlorides.

15. An arrangement as claimed in claim 13 or 14, **characterised in that** the temperature adjustment arrangement (19) comprises positioning the sampling filter (17) at a point of the flue gas channel (3), where the flue gas temperature is at least 650°C.

16. An arrangement as claimed in any one of claims 13 to 15, **characterised in that** the sampling filter (17) is arranged at a sampling point (8) that is arranged in the flue gas channel (3).

17. An arrangement as claimed in any one of claims 13 to 15, **characterised in that** the sampling point (8) is arranged in the flue gas channel (3) and the sampling filter (17) is arranged at a distance from the sampling point (8), and that the sampling point (8) is connected through a sampler (26) to the sampling filter (17).

18. An arrangement as claimed in claim 16 or 17, **characterised in that** the sampling point (8) is arranged in a superheater area and/or in a section of the flue gas channel (3) preceding it.
